(19) Europäisches Patentamt
European Patent Office
Office européen des brevets

(11) Publication number: **0 402 944 A2**

(12) # EUROPEAN PATENT APPLICATION

(21) Application number: **90111356.3**

(22) Date of filing: **15.06.90**

(51) Int. Cl.5: **G02F 1/135, G09G 3/02, H04N 1/024, B41J 2/445**

(30) Priority: **16.06.89 JP 155226/89**
**19.06.89 JP 158039/89**

(43) Date of publication of application:
**19.12.90 Bulletin 90/51**

(84) Designated Contracting States:
**DE FR GB IT**

(71) Applicant: **SEIKO INSTRUMENTS INC.**
**31-1, Kameido 6-chome Koto-ku**
**Tokyo 136(JP)**

(72) Inventor: **Iwaki, Tadao**
**c/o Seiko Instruments Inc., 31-3, Kameido 6-chome**
**Koto-ku, Tokyo(JP)**
Inventor: **Mitsuoka, Yasuyiki**
**c/o Seiko Instruments Inc., 31-1, Kameido 6-chome**
**Koto-ku, Tokyo(JP)**
Inventor: **Yamamoto, Shuhei**
**c/o Seiko Instruments Inc., 31-1, Kameido 6-chome**
**Koto-ku, Tokyo(JP)**
Inventor: **Ebihara, Teruo**
**c/o Seiko Instruments Inc., 31-1, Kameido 6-chome**
**Koto-ku, Tokyo(JP)**
Inventor: **Kato, Naoko**
**c/o Seiko Instruments Inc., 31-1, Kameido 6-chome**
**Koto-ku, Tokyo(JP)**

(74) Representative: **Fleuchaus, Leo, Dipl.-Ing. et al**
**Melchiorstrasse 42**
**D-8000 München 71(DE)**

(54) **Light addressed liquid crystal light valve.**

(57) A light addressed liquid crystal light valve has two optically different states switchable therebetween by bias voltage in response to incident light. A ferroelectric liquid crystal layer (10; 110) is sandwitched by a pair of front and rear alignment layers (7a, 7b; 107a, 107b) to establish the two stable states in the ferroelectric liquid crystal layer. A front electrode layer is disposed on the front alignment layer. A dielectric mirror (6; 106) is disposed on the rear alignment layer (7a; 107a). A photoconductive layer (4; 104) is disposed on the dielectric mirror and responsive to the incident light incident from the rear face of light valve to increase its electroconductivity. A barrier metal layer (13, 105) is disposed on the photoconductive layer and forms a Schottky diode by combining with the photoconductive layer. A rear electrode is disposed on the barrier metal layer and is divided into a plurality of sub-electrodes to apply various bias voltage on the ferroelectric liquid crystal layer to thereby control a light writing sensitivity of the light valve according to the intensity distribution of a writing light.

EP 0 402 944 A2

FIG. 1

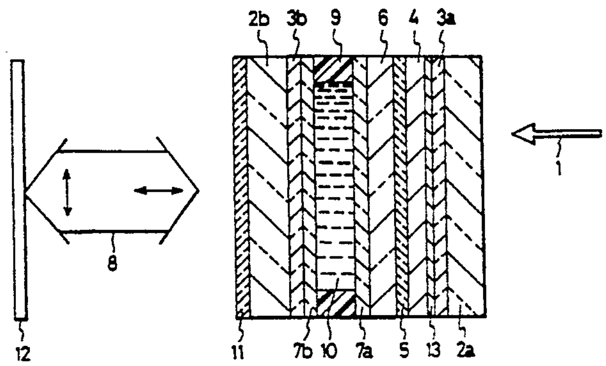
2b
3b
9
6
4
3a
1
8
12
11
7b
10
7a
5
13
2a

FIG. 6

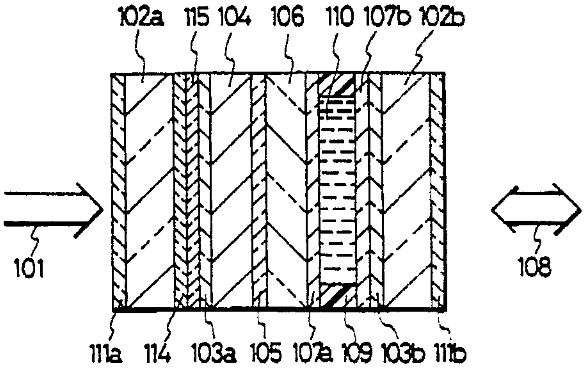
102a
115
104
106
110
107b
102b
101
108
111a
114
103a
105
107a
109
103b
111b

# LIGHT ADDRESSED LIQUID CRYSTAL LIGHT VALVE

## BACKGROUND OF THE INVENTION

### 1. Field of the Invention

The present invention relates to liquid crystal light valves which are activated optically to effect switching between optical ON state and optical OFF state, and which are utilized for intermediate recording medium of optical printer, graphic display device, light shutter, image processing device, optical pattern recognizing device, optical information processing system and so on.

### 2. Deseription of the Prior Art

There are various types of liquid crystal light valves which may be classified in terms of light addressing mode and liquid crystal materials.

The known light addressed liquid crystal light valve structure is as follows. A pair of transparent substrates is prepared for input and output windows. A transparent conductive electrode is coated on the one side of the input and output windows. A photoconductive layer or a light adsorption layer is deposited on the transparent conductive electrode of the input window.

Liquid crystal alignment layers are disposed on both of the electrode of the output window and the surface of the photoconductive layer or light absorption layer. Input and output window are clamped together so that the alignment layers are facing each other. Liquid crystal material is sandwiched between two alignment layers. The known light addressing modes include an opto-electric conversion mode of irradiating light onto photo conductive layer, through which liquid crystal layer is indirectly electrically biased, to optically change the electroconductivity of photo conductive layer to thereby electrically activate the liquid crystal layer, and another photo-thermal conversion mode of scanning laser beam along liquid crystal layer to thermally change the optical state of liquid crystal layer. The known liquid crystal modes of switching between ON and OFF states include phase transition mode of smectic A (SmA) liquid crystal, phase transition mode between nematic (Ne) liquid crystal phase and cholesteric (Ch) liquid crystal phase, dinamic scattering mode (DSM) of liquid crystal, twist nematic (TN) mode, super twist nematic (STN) mode and so on.

The opto-electro conversion mode is superior to the opto-termal conversion mode in view of swithching speed and therefore is expected for application of displaying moving image. However, in the known opto-electro conversion mode, the liquid crystal layer maintains its activated state only during the irradiation of light thereonto. After stopping the irradiation of light, the activated or ON state of liquid crystal can be momentarily held due to CR time constant of liquid crystal layer and thereafter immediately returns to the non-activated or OFF state.

The light addressed liquid crystal light valve having the twist nematic mode has nearly practically acceptable characteristics and has been used in incoherent/coherent input image converters for optical information processing.

In case of using twist nematic liquid crystal layer having normal twist angle of 90° in the opto-electro conversion mode light valve, a laser beam is utilized as an irradiating light source so as to use its afterglow for maintaining the active state. However, in such case, since the twist nematic liquid crystal holds its ON state only a morment, it is difficult to improve the resolution of light valve.

In order to obtain the large scale high resolution image display with such type of light valve, it would be necessary to repeatedly scan the laser beam along the identical path at high speed to thereby necessitate ultra high speed laser beam scanner with ultra high resolution and ultra high sensitive photo conductive film, and there would be many technical problems to be solved.

In order to record a binarized Fourier transform image on such type of light valve, it is necessary to entail the steps of previously taking the Fourier transform image into an electric system by use of a CCD camera, effecting a binarizing process thereon and thereafter recording it on the light valve with the aid of an optical scanning system such as a laser scanner in addition to having above mentioned problems.

## SUMMARY OF THE INVENTION

An object of the present invention is to provide a light addressed liquid crystal light valve which binarizes and records an image information to be optically written facilely.

Another object of the present invention is to provide a light addressed liquid crystal light valve which erases an written image information by appling low DC bias voltage with facility and at high

speed.

A further object of the present invention is to provide a light addressed liquid crystal light valve which is possible to arbitrarily control a magnitude of a spatial frequency component of an image information to be optically written and to record the image information to be optically written by arbitrarily dividing the image information.

To realize above objects, the light valve of the present invention utilizes a ferroelectric liquid crystal in a liquid crystal layer, forms a thin barrier metal film between a photoconductive layer and a transparent electrode located on the writing side of the light valve, and divides the transparent electrode located on the writing side of the light valve into a plurality of electrodes.

The ferroelectric liquid crystal is composed of mixture composition of pyrimidine-derivative chiral smectic liquid crystal materials, or composed of mixture composition of ester type chiral smectic liquid crystal materials and pyrimidine-derivative chiral smectic liquid crystal materials.

Molecules of the ferroelectric liquid crystal are aligned uniformly in a direction substantially along the liquid crystal layer with a proper pre-tilt angle beween the axis or director of molecules and the plane of layer according to binding force of the alignment layer in contact with the liquid crystal layer. Further, this binding force due to interaction at the boundary between the alignment layer and the liquid crystal layer is respectively weak so that the boundary molecules can angularly move or switch between two stable states (ON and OFF states) with the applying of opposite polarity voltages across the liquid crystal layer to thereby maximize the angular distance or cone angle between two stable states to increase the optical contrast between two stable states. Furthermore, this bistable state of two stable states has different threshold voltage values effective to switch between two stable states and maintains its stable state even after turnning off the bias voltage. In the result, the liquid crystal light valve can binarize, record and memorize the image information to be optically written.

The thin barrier metal film is formed by, for example, evaporation of Pt, Ir, Au, Pd, Rh, Ni, Cr or so on.

The thin barrier metal film and the photoconductive layer formed, for example, by an i-type hydrogenated amorphous silicon creates a Schottky barrier diode due to a rectifying function of a metal-semiconductor junction. It exhibits a very high resistivity in reverse direction and a low resistivity in forward direction. In the result, the light valve can thin the thickness of the photoconductive layer so that the photoconductive layer enhances its photo sensitivity and it is obtained the light valve having a high resolution and a high speed of response.

## BRIEF DESCRIPTION OF THE DRAWINGS

Fig. 1 is a structural sectional view of the light addressed liquid crystal light valve according to the present invention;

Fig. 2 is a diagram showing change of electric resistivity of photoconductive layer and barrier metal layer when applying bias voltage therebetween;

Fig. 3 is a diagram showing the relation between the bias voltage and reflectance under dark condition of the inventive light valve;

Fig. 4 is a diagram showing the relation between the bias voltage and reflectance under bright condition of the inventive light valve;

Fig. 5 is a conceptual view of coherent system applied with the inventive light valve;

Fig. 6 is a structual sectional view of the light addressed liquid crystal light valve showing another modification;

Fig. 7(A) is a plane view of a transparent substrate having sub-electrodes which a transparent electrode layer is divided, used in the inventive light valve;

Fig. 7(B) is a plane view of a transparent substrate having sub-electrodes showing another modification;

Fig. 8 is a structural sectional view of a transparent substrate having sub-electrodes, used in the inventive light valve;

Fig. 9 is a conceptual view of optical pattern recognition device applied with the inventive light valve;

Fig. 10 is a schematic diagram of one embodiment of a reference image and a signal image which are inputted to the photographic film shown in Fig. 9;

Fig. 11 is a diagram showing one embodiment of apllying a voltage to the liquid crystal light valve of the present invention; and

Fig. 12 is a diagram showing examples where a pattern is recorded on the liquid crystal light valve of the present invention.

## DETAILED DESCRIPTION OF THE INVENTION

Hereinafter, the present invention will be described in detail in conjunction with the attached drawings. Fig. 1 shows a structural sectional view of the light addressed liquid crystal light valve according to the present invention. The inventive light valve is characterized in that a ferroelectoric

liquid crystal is utilized to establish two different stable states having different transmittance or reflectance and being switchable between each other according to polarities of bias voltage in the light valve and a barrier metal layer is utilized to form a schottky diode by combining with a photoconductive layer.

A pair of rear and front transparent substrates 2a and 2b are made of glass or plastic are connected to each other by an outer seal 9 to form a light valve cell for accommodating therein a liquid crystal layer 10 composed of ferroelectric liquid crystal molecules. The input side of the substrate 2b is formed on its inner face sequentially with a transparent electrode layer 3b and an alignment layer 7b. The alignment layer 7b is formed by oblique evaporation of silicon monooxide in the angular direction of 75 to 85 degrees relative to the normal of substrate 2b.

The output side of the substrate 2a is also formed on its inner face with another transparent electrode layer 3a and another alignment layer 7a which is formed in the same manner to the alignment layer 7b. The pair of substrates 2a and 2b are opposed in controlled space relation to each other such that the pair of alignment layers 7a and 7b are disposed in contact with the interposed liquid crystal layer 10 at opposite side thereof.

Further, a barrier metal layer 13, a photoconductive layer 4, a light blocking layer 5 and a dielectiric mirror layer 6 are sequentially interposed between the transparent electrode layer 3a and the alignment layer 7a in multi-layer structure on the inner face of the output side of the substrate 2a. On the other hand, the input side of the substrate 2b is formed on its outer face with a non-reflective coating layer 11.

According to such structure of the light valve which includes the layer structure of the barrier metal layer 13, the photoconductive layer 4 and the liquid crystal layer 10, a writing light 1 is irradiated onto the layer structure from the outer or the output side of the face of transparent substrate 2a to effect switching between the two optically different stable ON and OFF states to thereby write image pattern into the liquid crystal layer 10, and a projection light 8 is irradiated onto the light valve from the outer face of the input side of the transparent substrate 2b to project the image pattern written in the liquid crystal layer 10 on a screen 12.

In making the inventive light valve of Fig. 1, a pair of transparent glass substrates 2a and 2b having a thickness of 2mm and being polished to less than 1/4 λ torelance are provided, and transparent electrode layeres 3a and 3b having a thickness of 500Å are deposited on each face of respective substrates 2a and 2b in the form of ITO transparent electroconductive film over the entire face of respective substrates. The barrier metal layer 13 is deposited on the transparent electrode layer 3a by evaporation of Pt. The Pt thin film is formed at thickness of 50Å to obtain a higher transmittance. The output side of the substrate 2a is placed within gas composed mainly of $SiF_4$. By decomposing $SiF_4$ with electric spark, intrinsic a-Si:H is deposited on the barrier metal layer 13 with the thickness of 3 μm to constitute the photoconductive layer 4. The light blocking layer 5 is formed on the photoconductive layer 4 which function to block the projection light 8 from entering into the photoconductive layer 4, and thereafter, silicon layer and germanium layer are alternatively deposited in superposed structure of fifteen layers to form the dielectric mirror layer 6 for a reflection layer. If the dielectric mirror layer 6 has a sufficient reflectance for incident visible light to avoid the affect of projection light to the photoconductive layer 4, the light blocking layer 5 can be eliminated.

Silicon monooxide (SiO) is obliquely evaporated onto the dielectric mirror layer 6 from an angular direction of 82 degree to the normal of the substrate at thickness of 2000Å which is measured by a film tickness gauge set along the evaporation direction to thereby form an alignment layer 7a. In the same manner, the input side of the substrate 2b is also evaporated to the oblique evaporation of SiO to form another alignment layer 7b on the transparent electrode 3b.

The pair of substrates 2a and 2b are coupled to each other with facing the respective alignment layers 7a and 7b to each other by the outer seal 9 composed of adhesive containing chip of glass fiber having diameter of about 1.5 μm effective to control the spacing between the pair of substrates.

A ferroelectric liquid crystal composition is introduced into the spacing to form the liquid crystal layer 10. The ferroelectric liquid crystal composition may be composed of mixture of ester type SmC liquid crystal materials added with optically active material. For example, the mixture is comprised of 4-((4′-octyl) phenyl) benzoic acid (3″-fluoro, 4″-octyloxy) phenyl ester:

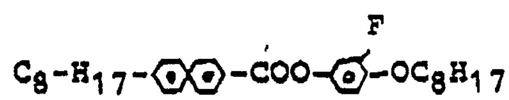

and 4-((4′-octyloxy)phenyl) benzoic acid (3″fluoro, 4″-octyloxy) phenyl ester:

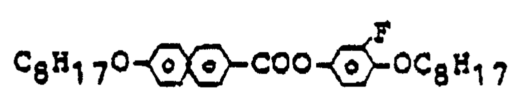

at the ratio of 1 : 1. The optically active material

may be composed of 5-octyloxynaphthalene carboxylic acid 1′-cyanoethyl ester:

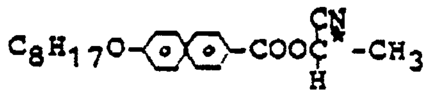

which is added to the mixture by weight of 25% to form the ferroelectric liquid crystal composition.

Fig. 2 shows the change of resistivity of the photoconductive layer and the barrier metal layer shown in Fig. 1 when applying bias voltage therebetween.

When a reverse bias is applied, it shows a great resistivity due to the Schottky barrier of the metal-semiconductor junction. When a forward bias is applied, it exhibits a lower resistivity.

Fig. 3 shows the reflectance-voltage characteristics of the light valve shown in Fig. 1 when applying different varying bias voltages between the pair of electrode layers under the dark condition. Under the reverse bias, the resistivity of the photoconductive layer 4 and the barrier metal layer 13 is larger than that of the liquid crystal layer 10, so that most of the applied voltage is applied to the photoconductive layer 4. Under the forward bias, the resistivity of the photoconductive layer 4 and the barrier metal layer 13 is less than that of the liquid crystal layer 10, so that most of the applied voltage is applied to the liquid crystal layer 10.

Fig. 4 shows the reflectance-voltage characteristics of the light valve shown in Fig. 1 when applying different varying bias voltage between the pair of electrode layers under the bright condition with irradiation of writing light. In this case, the photoconductive layer 4 exhibits a lower resistance, so that most of the applied voltage is applied to the liquid crystal layer 10.

In operation of the inventive light valve shown in Fig. 1 to carry out the writing of image thereonto by light source such as LED and laser beam, firstly the light valve is preset to one of two stable states. The presetting can be carried out by applying a DC forward bias voltage exceeding the forward threshold voltage value to the light valve under the dark condition so as to set all of the ferroelectric liquid crystal molecules in one of two stable states to memorize and hold this state.

Next, in writing a given image onto the light valve, a Dc reverse bias voltage having polarity opposite to that of the DC forward bias voltage for presetting, magnitude greater than the reverse threshold voltage under bright condition and magnitudo smaller than the reverse threshold voltage under dark condition is applied to the pair of electrode layers 3a, 3b, while the writing light 1 is selectively irradiated over the rear side of the light valve to optically write the given image into the liquid crystal layer 10. In this case, the portion of the photoconductive layer 4 irradiate by the writing light 1 generates photo carriers. The generated carriers are caused to drift in the direction to increase the voltage by the DC bias voltage. As a result, the resistance of the portion of the photoconductive layer irradiated by the writing light 1 decreases and the reverse bias voltage exceeding the reverse threshold voltage under bright condition is applied to the irradiated regions so that reversion of the spontaneous polarization reverse the liquid crystal molecules and the liquid crystal molecules are settled in another stable state.

Lastly, the written image can be projected on the screen 12 by irradiating linearly polarized projecting light 8 whose axis of polarization is coincident with the direction of orientation (or prependicular direction) of the liquid crystal molecules oriented by the presetting step and by projecting through an analyzer which is so disposed that its axis of polarization is perpendicular (or parallel) to the direction of polarization of light reflected from the light blocking layer 5.

In the practical example, the barrier metal layer 13 is made from platinum. The same result is obtained where the barrier metal layer 13 is made of a metal such as Ir, Au, Pd, Rh, Ni, or Cr.

An example in which the novel light valve finds application as an incoherent coherent input image converter is next described.

Fig. 5 is a conceptual view of a coherent light correlation system using a liquid crystal light valve according to the invention. Light reflected from an object 19 under investigation is focused onto a liquid crystal light valve 21 according to the invention by a lens 20. The liquid crystal light valve 21 has a larger area than a device using a nonlinear optical crystal and so the system can cope with the object if it is large. Since the response time of the liquid crystal light valve 21 is shorter than the response times of devices employing TN mode or DSM mode, the device is capable of high-speed processing on a substantially real-time basis. Coherent light 23 which is linearly polarized by a polarizing beam splitter 22 is made to impinge on the image produced in the liquid crystal light valve 21. The axis of polarization of the linearly polarized light agrees with the direction of the directors of the ferroelectric liquid crystal molecules at the time of total erasure. The irradiating light is changed into another polarized state by birefringence and reflected from only those portions in which the directors have been inverted. The reflected light again passes through the beam splitter 22. The magnitude of the component of the light changed into the other polarized state is necessarily reduced. This component adds to the component of the

incident coherent light 23 which is prevented from entering the light valve 21 by the beam splitter 22. The resulting light passes through a lens 24, a matched filter 25, and a lens 26, and is focused onto a correlation coordinate plane 27 to process optical information. in the present example, large objects can be investigated by the use of the incoherent/coherent input image converter utilizing the novel liquid crystal light valve. Thus, a coherent light correlation system is realized which is capable of high-speed processing on a substantially real-time basis.

Fig. 6 shows a structural sectional view of the light addressed liquid crystal light valve showing another modification. The inventive light valve is characterized in that the ferroelectric liquid crystal is utilized to establish two different stable states having diffelent trancemittance or reflectance and being switchable between each other according to polarities of bias voltage in the light valve and the transparent electrode is divided to apply voltage on plural portions of the ferroelectric liquid crystal layer independently.

A pair of the input and output sides of the transparent substrates 102a and 102b are made of glass or plastic are connected to each other by an outer seal 109 to form a light valve cell for accommodating therein a liquid crystal layer 110 composed of ferroelectric liquid crystal molecules. The output side of the substrate 102b is formed on its inner face sequentially with a transparent electrode layer 103b and an alignment layer 107b.

The alignment layer 107b is formed by oblique evaporation of silicon monooxide in the angular direction of 75 to 85 degrees relative to the normal of substrate 102b. The input side of the substrate 102a is also formed on its inner face with lead wire 114, insulating layer 115, another transparent electrode layer 103a divided into plural portions and another alignment layer 107a which is formed in the same manner to the alignment layer 107b. The pair of substrates 102a and 102b are opposed in controlled space relation to each other such that the pair of alignment layers 107a and 107b are disposed in contact with the interposed liquid crystal layer 110 at opposite side thereof.

Further, a photoconductive layer 104, a light blocking layer 105 and a dielectric mirror layer 106 are sequentially interposed between the transparent electrode layer 103a and the alignment layer 107a in multi-layer structure on the inner face of rear substrate 102a. On the other hand, the input and output side of the substrates 102a and 102b are formed on its outer face with non-reflective coating layers 111a and 111b.

According to such structure of the light valve which includes the layer structure of photoconductive layer 104 and the liquid crystal layer 110, a writing light 101 is irradiated onto the layer structure form the outer or input window of transparent substrate 102a to effect switching between the two optically different stable ON and OFF states to thereby write image pattern into the liquid crystal layer 110, and a projection light 108 is irradiated onto the light valve from the outer face of the output side of the transparent substrate 102b to project the image pattern written in the liquid crystal layer 110 on a screen.

A more detailed description will be given of the way of dividing the transparent electrode layer 103a. Fig. 7 is a plan view depicting one embodiment in which the transparent electrode is divided. Fig. 7 (A) illustrates a case where the transparent electrode layer 103a is divided into sub-electrodes each assuming an annular shape, while Fig. 7(B) shows a case where the transparent electrode layer 2a is divided into the sub-electrode arranged in a matrix. In both cases, each of the divided sub-electrodes is electrically connected to the lead wire 114 for connection to an outside power supply. The lead wire 114 is insulated by the insulating layer 115 for preventing short-circuit to another sub-electrodes. The sub-electrode of the transparent electrode layer 103a is, as illustrated in Fig. 8, electrically connected via a through-hole to the lead wire 114. Therefore, the electric connection of the transparent electrode layer 103a to the lead wire 114 is not established in portions other than the through-hole, with the result that no short-circuit takes place between the divided sub-electrodes. Note that a material of the transparent electrode layer involves the use of an ITO thin film having a thickness of 1600Å which is formed by vapor deposition or sputtering or CVD. $SiO_2$ having a thickness of 1000Å is used to form the insulating layer 115. The lead wire 114 having a wire width of 10 $\mu m$ is composed of Cr that is 500Å in thickness. A material of the lead wire 114 includes, as a matter of course, Au/Cr, Al-Si, Ti, Mo, Ti-Si and Cr-Si in addition to Cr.

Unlike the embodiments of Figs. 7 and 8, the transparent electrode 103a may be connected not through the insulating layer 115 but directly to the lead wire 114, and the lead wire 114 passing through a gap formed properly in the transparent electrode 103a may be taken out and led to an outer periphery of the transparent substrate 102a.

In accordance with one embodiment wherein the transparent electrode is, as illustrated in Fig. 7 (A), divided in annular shapes, a width of the annular sub-electrode is set to 2mm, and a space between annular sub-electrodes is set to 0.2mm. The transparent electrode layer 103a is divided into 6 pieces of sub-electrodes. The division of the transparent electrode layer 103a makes it possible to effect arbitrary point symmetric weighting on an

optical pattern to be recorded when recording the point symmetric optical pattern like, e.g., a Fourier conversion image on the liquid crystal light valve of the present invention. As a matter of course, the formation can readily be made without employing a special hyperfine processing technique on condition that a line width of the transparent electrode layer 103a depicted in Fig. 7 (A) is several tens µm or more, a space beween sub-electrodes is more than several µm and a line width of the lead wire 114 is several µm or above.

In accordance with one embodiment in which the transparent electrode is, as depicted in Fig. 7 (B) divided in a matrix, the transparent electrode layer 103a is divided into (8 x 8) pieces of sub-electrodes in a matrix wherein a size is 3mm square and a gap is 0.2mm. Excepting the way, shown in Fig. 7 (B), of taking out the lead wire 114, arbitrary take-out methods are practicable. As described above, where the image is matrix-recorded by use of, e.g., a microlens array while dividing the transparent electrode layer 103a, arbitrary weighting is effected on each optical matrix pattern to be recorded; or alternatively some may arbitrarily be selected from the above-mentioned optical matrix patterns and then recorded. The matrix divisions of the electrode can, as a matter of course, be carried out as in the case of the annular divisions of the electrode without using the special hyperfine processing technique on condition that the transparent electrode layer 103a of Fig. 7 (B) is divided to have a size of greater than several µm square, a gap width of several µm or more and a lead wire width of several µm or above. However, there arises such a problem that it is more difficult to take out the lead wire than in the annular divisions of the electrode according as the number of divisions increases.

In making the inventive light valve of Fig. 6, a pair of transparent glass substrates 102a and 102b are provided.

The substrate 102a is deposited a Cr thin film having a thickness of 500Å over its entire face by vapor deposition and thereafter the lead wire 114 having a wire width of 100 µm is formed by photolithography. Further, the insulating layer 115 is deposited on the substrate 102a in the form of $SiO_2$ having a thickness of 1000Å and thereafter the through-hole is formed by photolithography. Furthermore, the transparent electrode layer 103a is deposited thereon in the form of ITO transparent electrode film and is divided into sub-electrodes each assuming the annular shape or arranged in a matrix by photolithography. Each of sub-electrodes is electrically connected to the lead wire 114 via the through-hole. The substrate 102a is placed within gas composed mainly of $SiF_4$. By decomposing $SiF_4$ with electric spark, intrinsic a-Si:H is deposited on the transparent electrode layer 103a at thickness of 4 µm to constitute the photoconductive layer 104.

The light blocking layer is 105 is formed on the photoconductive layer 104 which functions to block the projection light 108 from entering into the photoconductive layer 104, and thereafter, silicon layer and silicon dioxide layer are alternately deposited in superposed structure of fifteen layers to form the dielectric mirror layer 106. If the dielectric mirror layer 106 has a sufficient reflectance for incident visible light to avoid the affect of projection light to the photoconductive layer 104, the light blocking layer 105 can be eliminated.

On the other hand, the transparent electrode layer 103b is deposited in the form of ITO transparent electrode film over the entire face of the substrate 102b.

Silicon monooxide (SiO) is obliquely evaporated onto the dielectric mirror layer 106 from an angular direction of 82 degree to the normal of the substrate with the thickness of 2000Å which is measured by a film thickness gauge set along the evaporation direction to thereby form the alignment layer 107a.

In the same manner, the substrate 102b is also deposited to the oblique evaporation of SiO to form another alignment layer 107b on the transparent electrode 103b.

The pair of substrates 102a and 102b are coupled to each other with facing the respective elignment layers 107a and 107b to each other by the outer seal 109 composed of adhesive containing chip of glass fiber having diameter of about 1.5 µm effective to control the spacing between the pair of substrates.

A ferroelectric liquid crystal composition is introduced into the spacing to form the liquid crystal layer 110. The ferroelectric liquid crystal composition may be composed of mixture of ester type SmC liquid crystal materials added with optically active material. For example, the mixture is composed of 4-((4′-octyl)phenyl) benzoic acid (3″-fluoro, 4″-octyloxy) phenyl ester and 4-((4′-octyloxy) phenyl) benzoic acid (3″ fluoro, 4″-octyloxy) phenyl ester at the ratio of 1 : 1. The optically active material may be composed of 5-octyloxynaphthalene carboxylic acid 1′-cyanoethyl ester which is added to the mixture by weight of 25% to form the ferroelectric liquid crystal composition.

The light valve has a first threshold voltage value under the bright condition, and a second threshold voltage value under the dark condition, which is greater than the first threshold voltage value due to the high resistivity of photoconductive layer 104 under the dark condition, effective to drop the net bias voltage applied across the liquid crystal layer 110. Further, in order to switch between two stable states either in the dark and bright conditions, a bias voltage of opposite polarity and exceeding the threshold voltage value must be applied to the light valve to reverse the spontaneous dipole of each molecule which is in parallel to the bias voltage field to thereby angularly displace each molecules between two stable states.

In operation of the inventive light valve to carry out the writing of image or Fourier transform pattern thereonto by means of light source such as ID and LED, firstly the light valve is preset to one of two stable states. The presetting can be carried out by either of applying a DC voltage exceeding the first threshold voltage value to the light valve under the bright condition with irradiating incident light over the entire surface of photoconductive layer 104, or applying a presetting DC voltage exceeding the second threshold voltage value to the light valve under the dark condition so as to set all of the ferroelectric liquid crystal molecules in one of two stable states to memorize and hold this state.

Next, in writing a given image or Fourie transform pattern onto the light valve,

An opposite polarity of DC bias voltage whose magnitude is greater than that under bright condition and smaller than that under dark condition is applied between two transparent conductive electrodes 103a and 103b, while a writing light 101 of laser beam is selectively irradiated over the rear side of light valve to optically write the given image into the ferroelectric liquid crystal layer. In this case, since the photoconductive layer 104 has sufficient sensitivity to light wavelength of 700 to 800 nm, laser beam which has a central wavelength of 780nm, and which is produced by semiconductor laser device can effectively generate carrier in the irradiated region of the photoconductive layer 104 to reduce the electric resistivity of photoconductive layer 104. Therefore, the writing bias DC voltage is almost directly applied to portion of the liquid crystal layer 110 corresponding to the irradiated region to thereby activate the liquid crystal molecules. On the other hand, the writing bias DC voltage is almost not applied to the remaining portion of liquid crystal layer 110 corresponding the non-irradiated region of photoconductive layer 104 because the non-irradiated region maintains its high resistivity so that the liquid crystal molecules in this remaining portion can not be activated and therefore maintain its preset state. As a result, the image is written and memorized in the liquid crystal layer 110 in the form of pattern defined by the arrangement of the locally activated state over the preset state.

At the time, the light valve can enhance the outer optical writing sensitivity due to that a voltage value applied to each of sub-electrodes divided in annular shape or in matrix is increased in proportion as it draw toward the outer portion. Even if the image to be written has a point-symmetric optical intensity distribution in which the optical intensity is high at the center, the light valve can record the image clearly. Thus, the light valve can clearly record the Fourier spectrum having a broad spatial frequency region.

In reading the thus written image, a readout or projection light linearly polarized through a polarizer is irradiated onto the front face of light valve, and the readout light reflected by the dielectric mirror layer 103 or the light blocking layer 105 is introduced through an analyzer onto a screen to project and reproduce the image. The contrast ratio of up to 400 : 1 can be obtained between two stable states by using polarizer and analyzer having 99.9% of polarization degree and 38% of light trans-mittance for each.

Further, in operation of the inventive light valve to carry out the presetting and writing steps, it may be applied with the bias DC voltage supperposed AC voltage of 1KHz to 50KHz.

Furthermore, the light valve shown in Fig. 6 may be disposed the barrier metal layer 13 between the transparent electrode layer 103a and the photoconductive layer 104 to form a Schottky diode by combining with the photoconductive layer 104.

An example in which the light valve finds application as an optical pattern recognition device is next described.

Fig. 9 shows a conceptual view of an optical pattern recognition device using the light valve shown in Fig. 6. A coherent light emitted from a first laser beam source 116 is expanded to have a predetermined beam diameter by a first beam expander 117, is irradiated to a photographic film 118 on cohich a reference image and a signal image are recorded and is focused onto a light valve 120 of the present invention by a first Fourier transform lens 19 to form a Fourier transform pattern on the light valve 120.

The light valve 120 is preset to one of two stable states uniformly. When the coherent light is focused onto the light valve 120, the Fourier transform pattern of the reference image and the signal image is recorded on the light valve 120 while a DC voltage having polarity opposite to that of the presetting DC voltage and magnitude greater than the threshold value of bright condition and smaller than the threshold value of dark condition is applied to the light valve 120.

At the time, the light valve 120 can record the desirable image by applying proper bias voltages to divided sub-electrodes individually. Further, the light valve 120 can record the image on its specified area and erase the image recorded on its specified area by applying bias voltage to specified

sub-electrodes among the divided sub-electrodes of the transparent electrode layer 103a.

Next, a coherent light emitted from a second laser beam source 121 is expanded to have a predetermined beam diameter by a second beam expander 122, is changed its optical-path by a polarized light beam splitter 123 and is irradiated to the reading surface of the light valve 120. The light irradiated to the area in which the Fourier transform pattern of the reference image and the signal image is recorded is read by rotating a polarization plane through 90 degrees and is focused onto a CCD camera 125 through the polarized light beam splitter 123 and a second Fourier lens 124. The light irradiated to the area in which the Fourier transform pattern is not recorded is reflected by the polarized light beam splitter 123 due to that the polarization plane of the light is not changed. At the time, the light which passes the polarized light beam splitter 123 is only an intensity information of the Fourier transform pattern of the reference image and the signal image. Thus, a crosscorrelation peak and an autocorrelation peak of the reference image and the signal image are observed by a video monitor 126. A degree of which the signal image resembles the reference image can more accurately be recognized with a greater magnitude of the crosscorrelation peak or a smaller half-value width of the crosscorrelation peak.

The photographic film 118 and the light valve 120 are disposed on front and rear focal planes of the first Fourier transform lens 119. The light valve 120 and the CCD camera 125 are disposed on front and rear focal planes of the second Fourier transform lens 124.

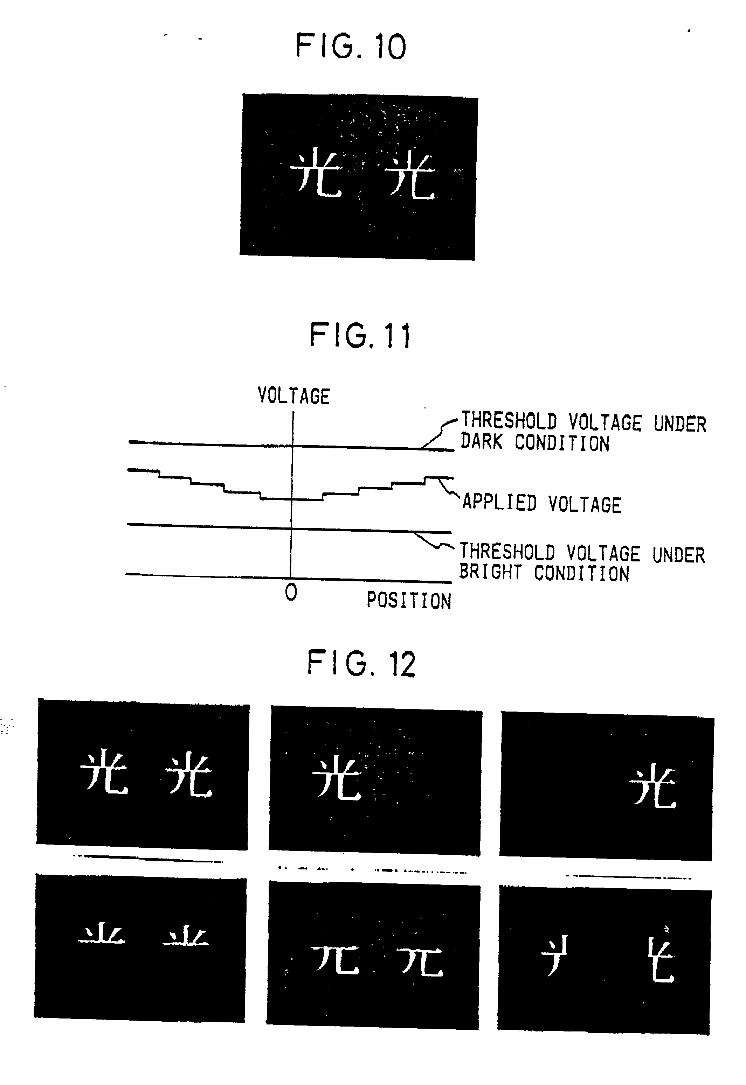

Fig. 10 shows a schematic diagram of one embodiment of the reference image and the signal image which are inputted to the photographic film 118 shown in Fig. 9. The input images are negative images of juxtaposed chinese characters "光". In the optical pattern recognition device shown in Fig. 9, it observes a crosscorrelation peak using the photographic film 118 recorded the input images and the light valve 120 having the transparent electrode layer 103a shown in Fig. 7(A). As a result of observation, it has proven that there are varied a half-value width and a intensity of a crosscorrelation peak which are obtained from a distribution and levels of bias voltages applied to sub-electrodes of the transparent electrode layer 103a. Further, it has proven that the crosscorrelation peak having a strongest intensity and a narrowest half-value width is obtained when applied voltages have voltage-distribution shown in Fig. 11. Furthermore, in the case using the light valve 120 which has the transparent electrode layer 103a shown in Fig. 7 (B), the light valve 120 can record various images shown in Fig. 12 due to that it applies various bias voltages to sub-electrodes.

## Claims

1. A liquid crystal device having two optically different stable states switchable therebetween by bias voltage in response to incident light, the device comprizing:

a liquid crystal layer composed of ferroelectric liquid crystal composition;

a pair of input side and output side of the alignment layers sandwiching therebetween said liquid crystal layer to establish said optically different stable states in said liquid crystal layer;

a input side of the electrode layer adjacent to said input side of the alignment layer;

an optically reflecting layer adjacent to said output side of the alignment layer;

a photoconductive layer disposed on said reflecting layer and responsible to said incident light incident from the output face to increase its electro conductivity;

a barrier metal layer disposed on said photoconductive layer to from a Schottky barrier due to a junction of said photoconductive layer and said barrier metal layer;

a output side of the electrode layer disposed on said barrier metal layer and cooperative with said input side of the electrode layer to apply said bias voltage between a multi-layer structure including said liquid crystal layer and said photoconductive layer such that effective bias voltage is applied across said liquid crystal layer through the increased electroconductivity portion of photoconductive layer to thereby effect the switching between said two stable states; and

a pair of input and output side of the transparent substrates for sandwiching therebetween said multi-layer structure.

2. A liquid crystal device according to claim 1; wherein said alignment layer is comprised of an obliquely evaporated silicon monooxide film having tilted micro column structure effective to establish said two stable states in said liquid crystal layer.

3. A liquid crystal device according to claim 1; wherein said photoconductive layer is comprised of a hydrogenated amorphous silicon film.

4. A liquid crystal device according to claim 1; including an optically blocking layer interposed between said optically reflecting layer and said photoconductive layer.

5. A liquid crystal device according to claim 1; wherein said output side of the electrode layer is divide into a plurality of sub-electrodes.

6. A liquid crystal device according to claim 5; wherein said sub-electrodes are disposed in annular shape.

7. A liquid crystal device according to claim 5; wherein said sub-electrodes are disposed in matrix.

8. A liquid crystal device having two optically different stable states switchable therebetween by bias voltage in response to incident light, the device comprising:
a liquid crystal layer composed of ferroelectric liquid crystal composition;
a pair of input and output side of the alignment layers sandwiching therebetween said liquid crystal layer to establish said optically different stable states in said liquid crystal layer;
a input side of the electrode layer adjacent to said input side of the alignment layer;
an optically reflecting layer adjacent to said output side of the alignment;
a photoconductive layer disposed on said reflection layer and responsive to said incident light incident from the output face to increase it a electroconductivity;
a output side of the electrode layer disposed on said photoconductive layer, divided into a plurality of sub-electrodes and cooperative with said input side of the electrode layer to apply individually said bias voltage between a multi-layer structure including said liquid crystal layer and said photoconductive layer and corresponding to each of said sub-electrodes such that effective bias voltage is applied across said liquid crystal layer through said increased electroconductivity portion of photoconductive layer to thereby effect the switching between said two stable states; and
a pair of input and output side of the transparent substrates for sandwiching therebetween said multi-layer structure.

9. A liquid crystal device according to claim 8; wherein said photoconductive layer is composed of a hydrogenated amorphous silicon film.

10. A liquid crystal device according to claim 8; including an optically blocking layer interposed between said optically reflecting layer and said photoconductive layer.

11. A liquid crystal device according to claim 8; wherein said alignment layer is comprised of an obliquely evaporated silicon monooxide film having tilted micro column structure effective to establish said two stable states in said liquid crystal layer.

12. A liquid crystal device according to claim 8; wherein said output side of the electrode layer is divided into a plurality of sub-electrodes in matrix.

13. A liquid crystal device according to claim 8; wherein said output side of the electrode layer is divided into a plurality of sub-electrodes in annular shape.

FIG. 1

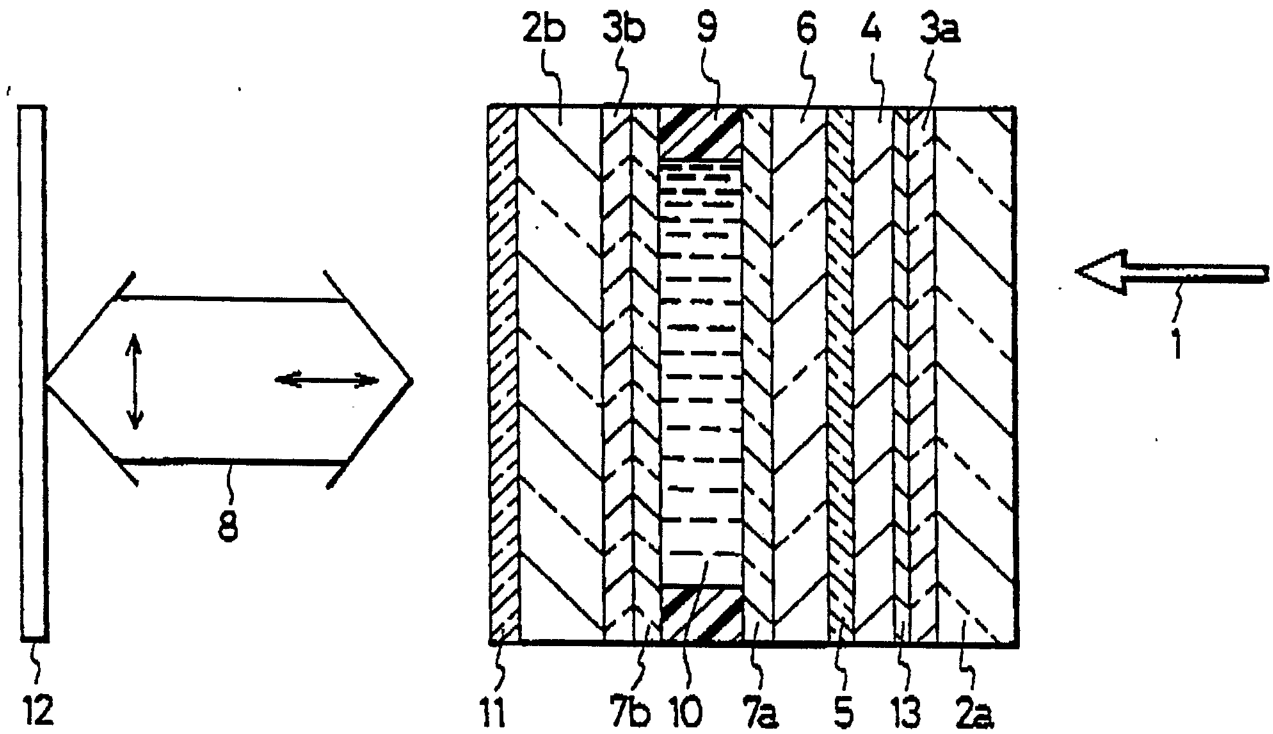
2b
3b
9
6
4
3a
1
8
12
11
7b
10
7a
5
13
2a

FIG. 2

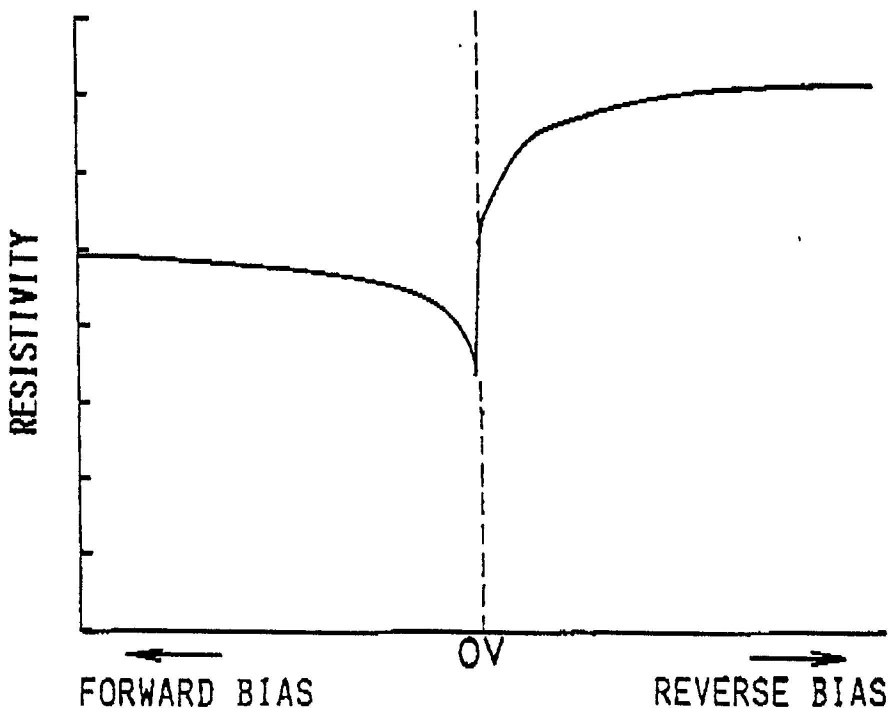
RESISTIVITY
OV
FORWARD BIAS
REVERSE BIAS

FIG. 3

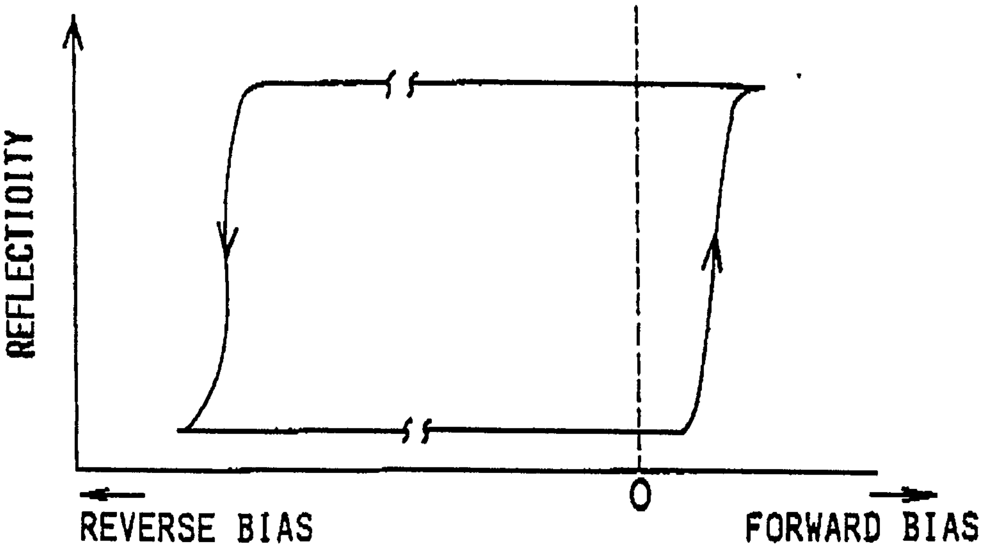
REFLECTIVITY
0
REVERSE BIAS
FORWARD BIAS

FIG. 4

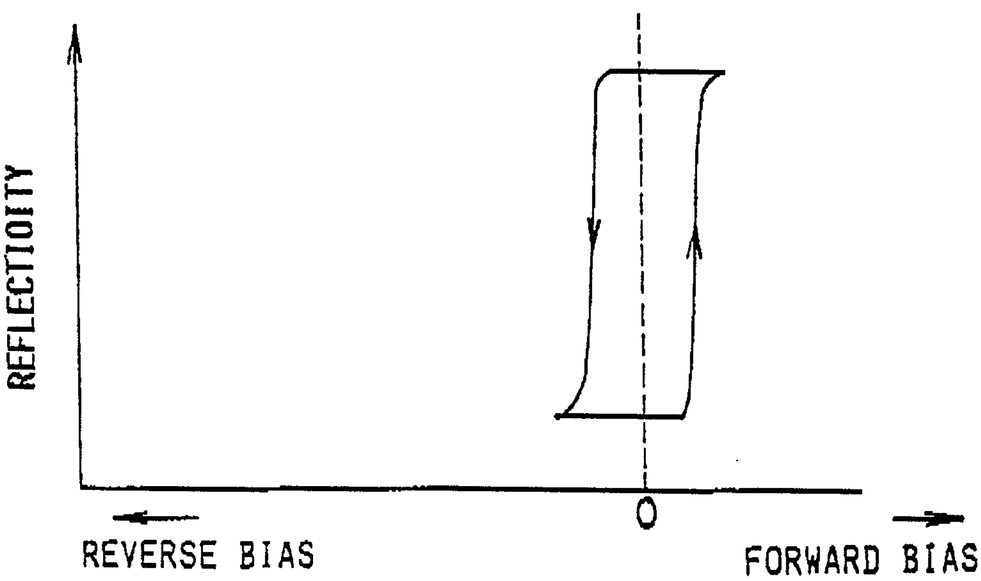
REFLECTIVITY
0
REVERSE BIAS
FORWARD BIAS

FIG. 5

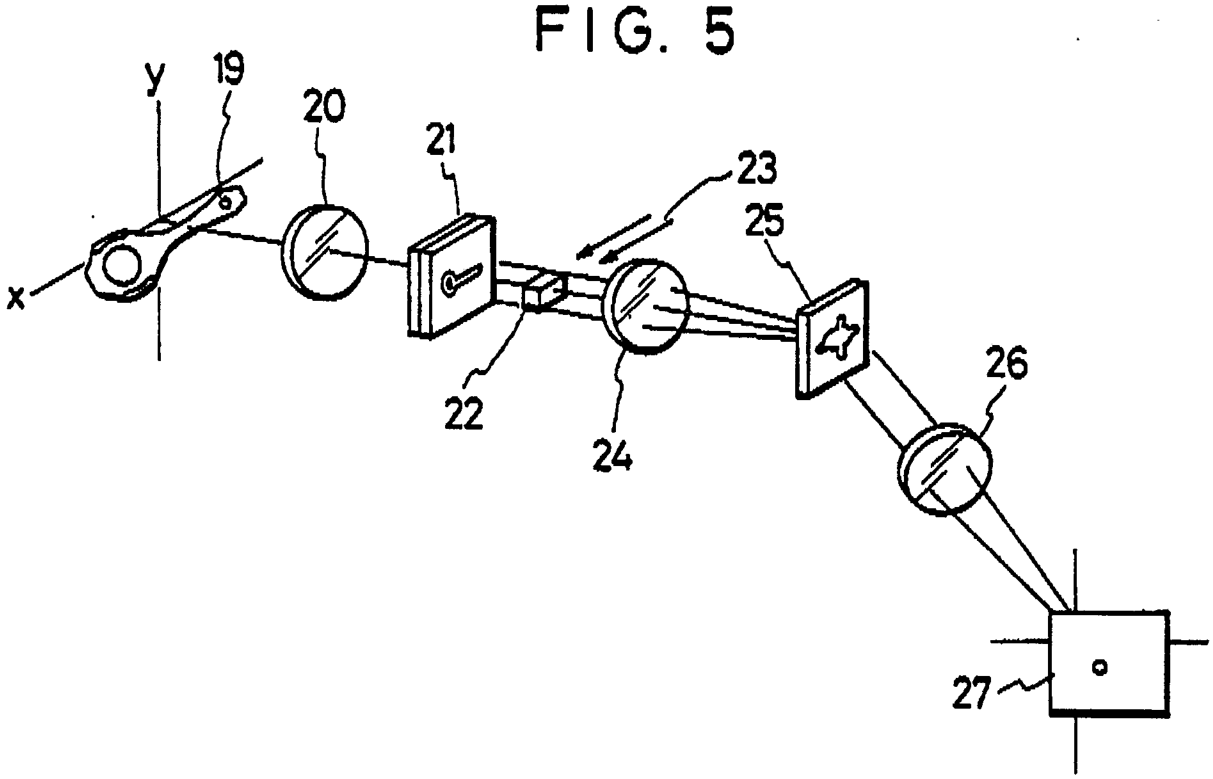
y
19
20
21
23
25
x
22
24
26
27

FIG. 6

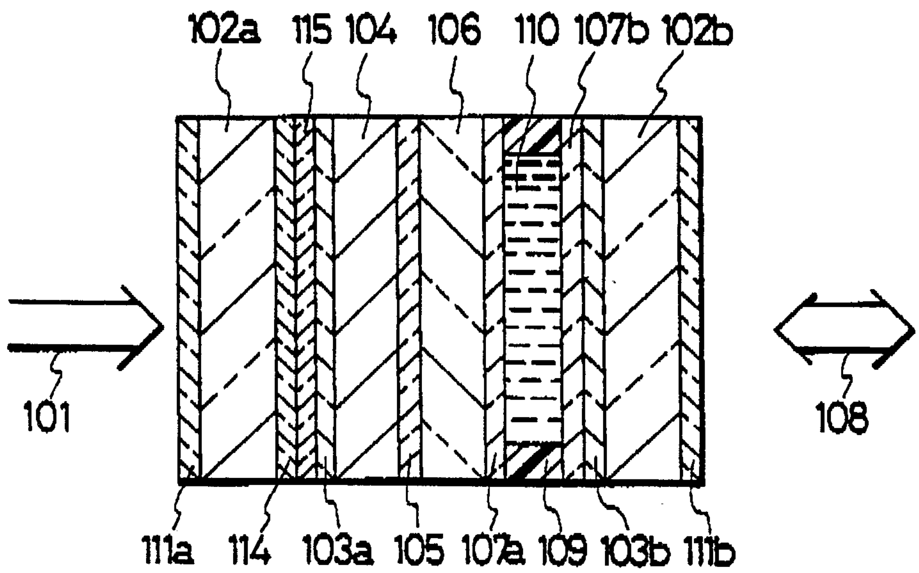
102a
115
104
106
110
107b
102b
101
108
111a
114
103a
105
107a
109
103b
111b

FIG. 7(A)

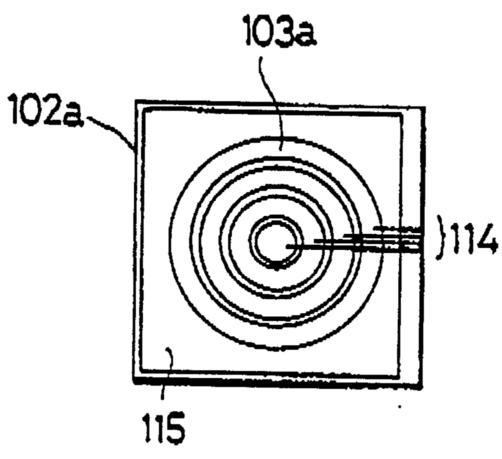


FIG. 7(B)

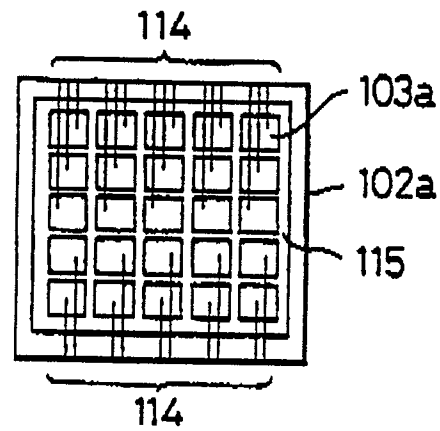


FIG. 8

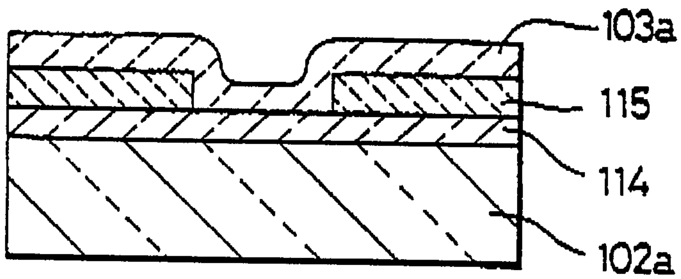


FIG. 9

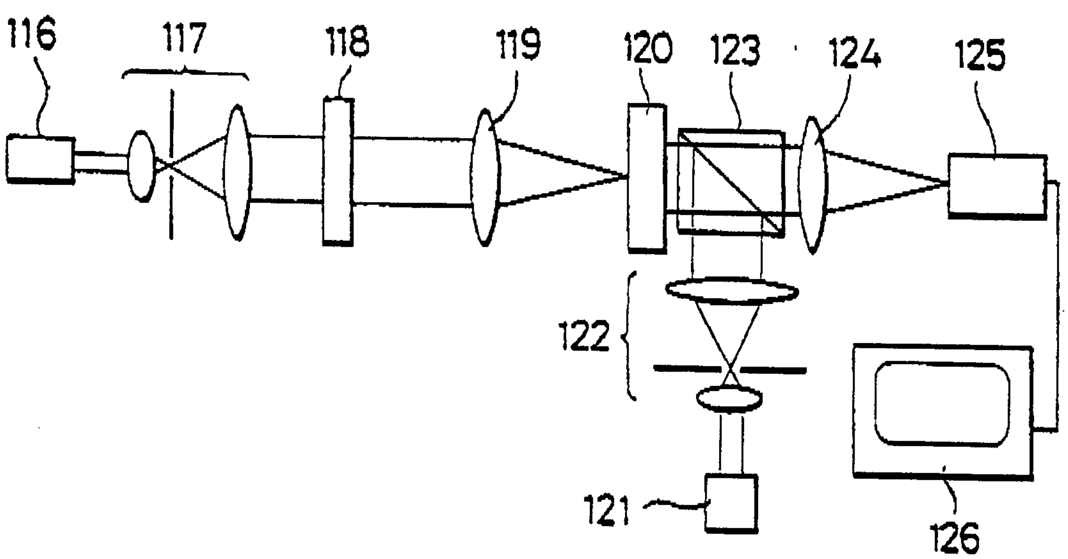

FIG. 10

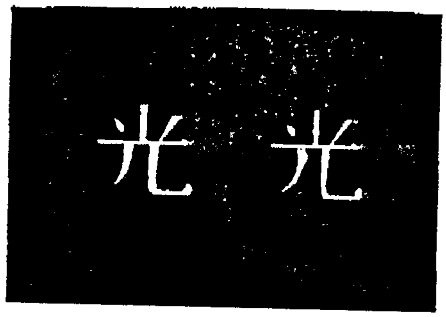


FIG. 11

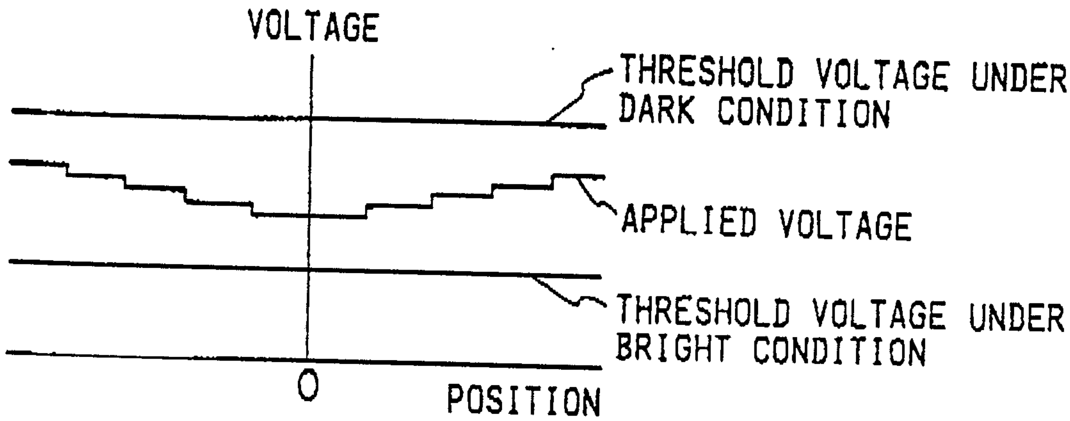


FIG. 12